Europäisches Patentamt

European Patent Office

Office européen des brevets

⑩

(11) Publication number: **0 088 601**
**B1**

(12) **EUROPEAN PATENT SPECIFICATION**

(45) Date of publication of patent specification: **15.04.87**

(21) Application number: **83301163.8**

(22) Date of filing: **04.03.83**

(51) Int. Cl.⁴: **G 01 N 35/04**

(54) Analyzer for chemical analysis of a liquid.

(30) Priority: **04.03.82 US 354859**

(43) Date of publication of application:
**14.09.83 Bulletin 83/37**

(45) Publication of the grant of the patent:
**15.04.87 Bulletin 87/16**

(84) Designated Contracting States:
**DE FR GB**

(56) References cited:
**DE-A-1 648 934**
**DE-B-1 250 160**
**US-A-4 302 420**
**US-A-4 303 611**

(73) Proprietor: **EASTMAN KODAK COMPANY**
**343 State Street**
**Rochester New York 14650 (US)**

(72) Inventor: **Jakubowicz, Raymond Francis**
**256 Fishell Road**
**Rush New York 14543 (US)**

(74) Representative: **Baron, Paul Alexander Clifford et al**
**Kodak Limited Patent Department**
**Headstone Drive**
**Harrow Middlesex HA1 4TY (GB)**

Courier Press, Leamington Spa, England.

## Description

The present invention relates to an analyzer for the chemical analysis of substances, known as analytes, in liquids. More specifically, the invention relates to an analyzer having apparatus for automatically advancing a test element through such an analyzer.

US—A—4303611 describes an analyzer having an incubator for generally flat test elements in which the test elements are supported in the incubator in a vertical stack with adjacent test elements resting against each other. Such an arrangement has produced a greatly simplified analyzer in which the loss of gases from the test elements during incubation is substantially reduced.

Although significant advantages are obtained by the disclosed arrangement, there is a problem in that one mechanism is required to load test elements onto the top of the stack in the incubator and a separately-driven mechanism is needed to unload test elements from the bottom of the stack upon completion of the incubation cycle. To accommodate the separate mechanisms in the analyzer, the mechanism for unloading test elements is disposed at an angle to the loading mechanism; such an arrangement makes it necessary to also locate the detection station at an angle to the path of test element movement into the incubator. Thus, the loading and unloading mechanisms are relatively complex and require a substantial amount of room in the analyzer.

The present invention overcomes the problems noted above. The loading and unloading mechanisms are arranged such that a test element is moved through the analyzer in a generally linear path, and both the mechanisms are continuously coupled to a single drive means. The continuous coupling is achieved by providing for one member to move to an idle position when the other member is operative to advance a test element.

In accordance with the present invention there is provided an analyzer for the chemical analysis of a liquid contained in a test element, said analyzer comprising a metering station, a storage station and a detection station, through which said test element is moved during the analysis of said liquid, and transport means for sequentially advancing said test element through said stations, said transport means comprising a loading member moveable from (1) an idle position upstream of said metering station, to (2) an element-engaging position at said metering station, and to (3) an element-loading position at said storage station, and back to the other positions while not disturbing said test elements, and an unloading member movable from (1') an idle position upstream of said storage station, to (2') an element-engaging position at said storage station, and to (3') an element-loading position at said detection station, and back to the other positions while not disturbing said test elements, characterized by a single reversible drive means simultaneously coupled to said loading member and said unloading member and which operates in one direction to move said loading member to its (1), (2), and (3) positions while synchronously moving said unloading member to its (3'), (2') and (1') position, and vice versa.

It is an advantage of the present invention that the analyzer has a single drive means simultaneously driving both the loading and unloading mechanisms in a manner such that the loading and unloading functions occur independently. Such an arrangement provides for a greatly simplified device in which test elements can be advanced through the analyzer along a generally linear path.

Embodiments of the present invention will now be described, by way of example, with reference to the accompanying drawings in which:

Fig. 1 is a perspective view of an analyzer constructed in accordance with the present invention.

Fig. 2 is a fragmentary elevational view, in section, taken generally along the line II—II of Fig. 1;

Fig. 3 is a section view taken generally along the line III—III of Fig. 2;

Fig. 4 is a plan view of the face of the fiber optics reflectometer; and

Figs. 5a and 5b are enlarged section views, similar to a portion of Fig. 2, illustrating the steps in the operation of the analyzer.

The specific embodiments hereinafter described refer to an analyzer having an incubator in which test elements contained therein are arranged in a stack, and the detector is a fiber optics reflectometer. The invention is a also applicable to an analyzer using any kind of storage chamber adapted to contain more than one test element. Further, it is applicable to an analyzer using any detector means for detecting properties of the test element, whether it be a reflectometer for measuring an optical density change, a fluorimeter for measuring fluorescence or phosphorescence in a test element, or some other kind of detector.

The invention hereinafter described refers to blood serum as the preferred liquid under analysis. In addition, other analyte-containing liquids can be analyzed, including industrial liquids containing nonbiological analytes.

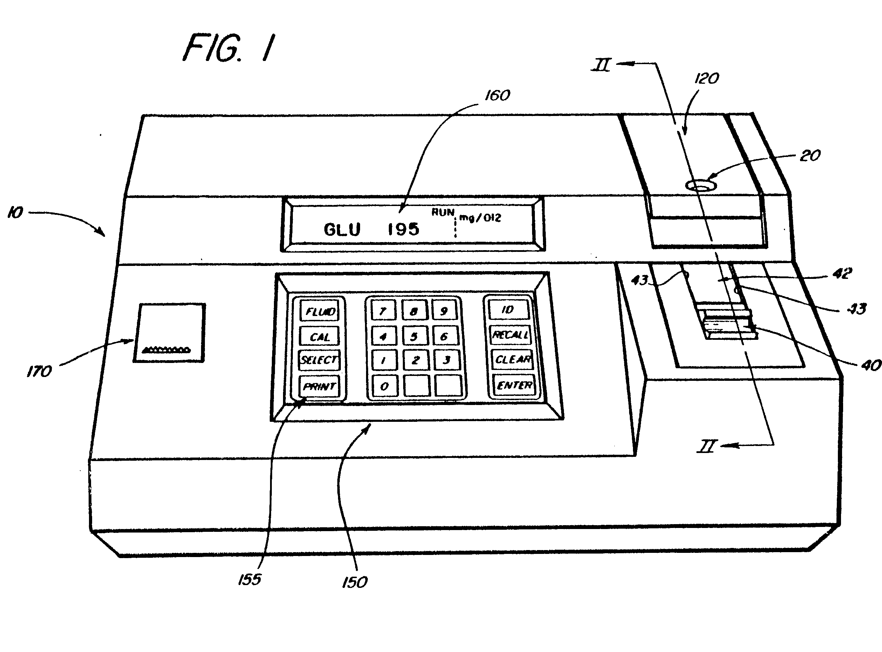

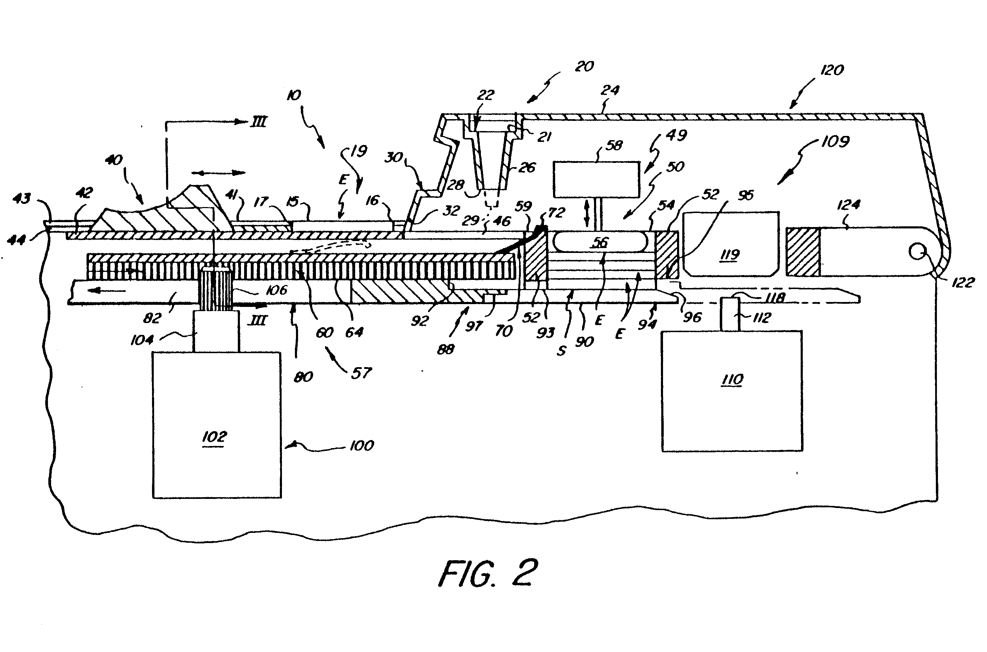

In Figs. 1 and 2, there is shown an analyzer 10 which comprises a load station 19, a metering station 20, a storage station 49 at which a storage chamber or incubator 50 is located, a pusher mechanism 40 for moving a test element E from the load station 19 to the station 20, and a detection station 109 at which a detector 110 is located. A transport means 57 includes a loading member 60 for loading a test element E into incubator 50, an unloading member 80 for unloading an element from the incubator 50, and drive means 100 for driving the members 60 and 80 in a reciprocating motion. A pivotable cover 120 is hinged at 122 to a bracket 124.

Analyzer 10 is capable of measuring a variety of analytes of liquids, particularly those of biological liquids. This is accomplished preferably through the use of test elements E which are generally flat (Fig. 2) and have one or more liquid-containing portions (not shown) mounted in a plastic frame member 15; the liquid-containing portions (not shown) are mounted on a transparent, liquid-impervious support (not shown). The liquid is applied by depositing a quantity, for example in the form of a drop, onto the test element E. Edges 16 and 17 of test element E define the leading and trailing edges, respectively, of the elements E as they are moved through the analyzer.

The test elements E preferably are constructed in the manner described in, for example, US—A—3,992,158 and US—A—Re 30,267. Deposited sample liquid spreads into the layers (not shown) of element E where a reaction takes place that generates a detectable change.

As shown in Fig. 2, a molded portion 22 of cover 120 is shaped to accommodate a conventional pipette (not shown). Portion 22 projects inwardly from the exterior surface 24 of cover 120 to form a shoulder 21 and terminates in a truncated cone 26 which includes an aperture 28. Cone 26 and aperture 28 are sized to align and support a pipette tip 29 (shown in dashed lines) such that a quantity of liquid can be dispensed therefrom onto a test element E.

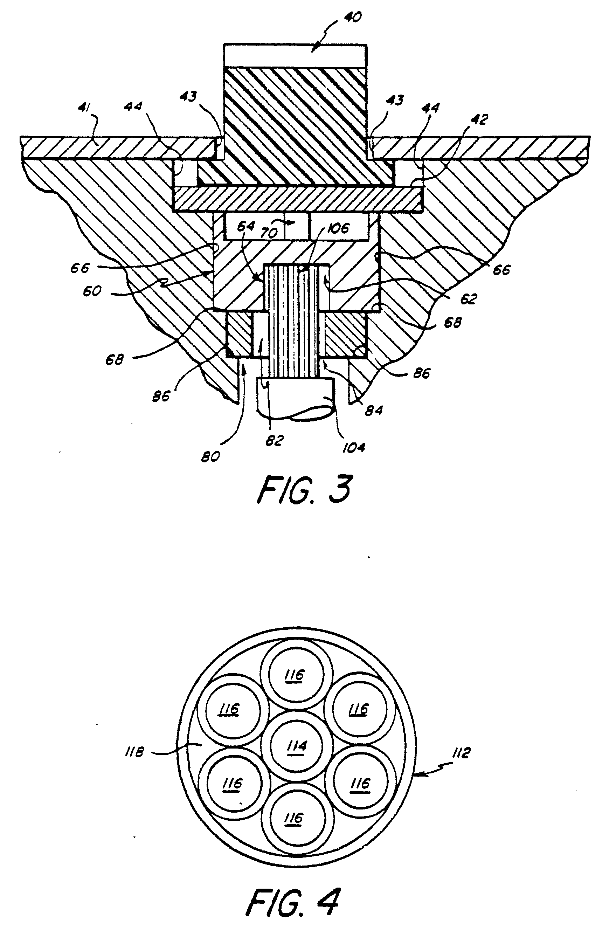

Cover 120 includes, at front portion 30 thereof, a slot 32 sized to permit passage of the test element E. The test element E is moved through the slot 32 by means of mechanism 40 which is mounted for manual actuation between a cover plate 41 and a support plate 42 (Fig. 3). Edge surfaces 43 of plate 41 are spaced at a distance sufficient to allow mechanism 40 to reciprocate between them. Support plate 42 is mounted between two linear and parallel shoulders 44. The portion of plate 42 that extends under front portion 30 of cover 120 comprises a slot 46 extending generally parallel to shoulders 44. Slot 46 permits loading member 60, discussed hereinafter, to engage test elements E located at metering station 20.

Incubator 50 is preferably collinear with the path travelled by mechanism 40 between edge surfaces 43 and is preferably constructed in the manner described in the aforesaid US—A—4,303,611. Incubator 50 comprises a first pair of walls 52 which are joined to a second pair of walls 54, a weighted cover 56, and camming means 58 adapted to raise cover 56 when a test element E is advanced into incubator 50. The wall 52 adjacent station 20 is provided with a slot 59 which receives a finger 70 of loading member 60 when member 60 reaches its most advanced position (shown in solid lines in Fig. 2). The walls 52 and 54 are dimensioned to receive test elements E in a stack S such that each element E, except for the uppermost element E, is covered and contacted by the test element E above it; the uppermost element E is covered by cover 56. Conventional heating elements (not shown) are preferably included in walls 52 and 54 to maintain the temperature of the incubator 50 at a desired level.

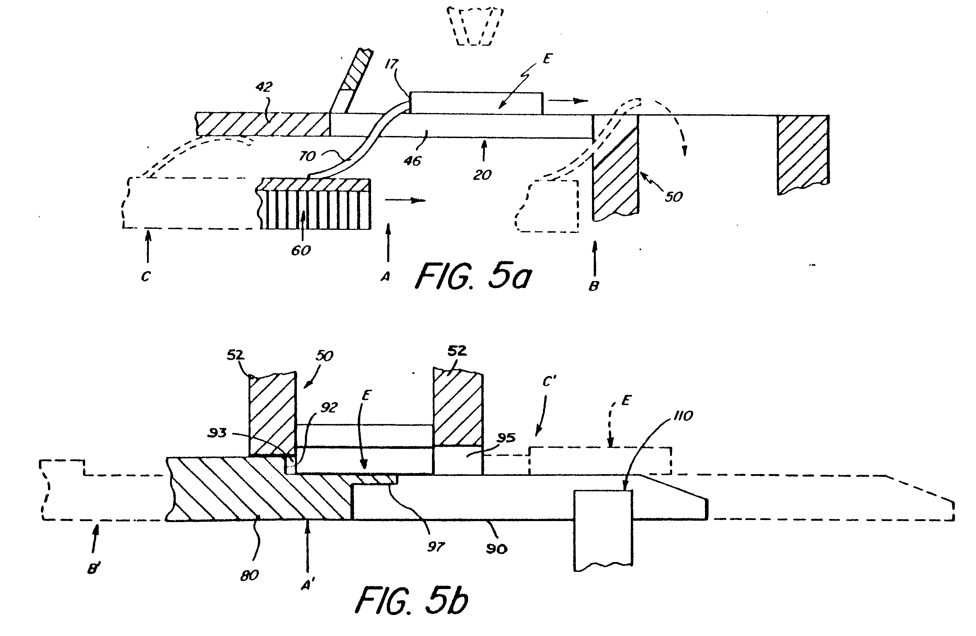

Member 60 is mounted for reciprocative movement under support plate 42 and within a passage defined by opposed surfaces 66 and supporting shoulders 68 (Fig. 3). Member 60 comprises a notch 62 (Fig. 3) which receives a rack 64 along its length thereof. As shown in Fig. 5a, member 60 is moved through positions A, B, and C, as will be explained in more detail hereinafter.

Finger 70 (Fig. 2) on member 60 is flexible and projects upwardly into the path of test elements E moved through metering station 20. Slots 46 and 59 are disposed to accommodate finger 70. Tip 72 of finger 70 is curved to provide a camming surface that engages support plate 42 when member 60 is retracted to its most rearward, or idle, position C (shown in dashed lines in Fig. 5a). The flexibility of finger 70 permits finger 70 to bend back under plate 42 and also permits a test element E to override the finger 70 and enter metering station 20, when member 60 occupies position A.

Member 80 is provided to unload test elements E from the stack S on a first-in, first-out basis. Member 80 is mounted under member 60 (Fig. 2) for reciprocative movement through positions A', B', and C' as shown in Fig. 5b. Member 80 comprises a notch 82 which receives a rack 84. Rack 84 is located opposite to rack 64 such that the members 60 and 80 are driven in opposite directions by a pinion 106. Member 80 is supported on shoulders 86, and members 60 and 80 are constrained to move along parallel paths which are spaced one above the other and are generally parallel to the path of movement of test elements E through analyzer 10.

Member 80 comprises an end portion 88 (Fig. 2) that is adapted to remove the bottommost element E from stack S in incubator 50. End portion 88 comprises arms 90 and a raised shoulder 92 which are adapted to engage the bottommost element E, in the manner described in US—A—4,302,420. A slot 93 is provided in the wall 52 adjacent station 20 to allow arms 90 and shoulder 92, but not a test element, E, to pass therethrough. (See Fig. 5b). The opposite wall 52 has a slot 95 which is sufficiently large to allow passage of arms 90 and the test elements E. A surface 97 on member 80, extending under the position occupied by test elements E carried by member 80, is preferably provided with white and dark reference coatings for detector 110.

Forward movement of shoulder 92 toward detector 110 serves to move the test element E under a weight 119 at detector 110. During retraction of shoulder 92 to the position B' (Fig. 5b), retaining springs (not shown) prevent rearward movement of the test element E at the detector 110. Arms 90 include ends 94 having camming surfaces 96 thereon which are adapted to raise test elements E off detector 110 before sliding elements E relative to the detector 110, as described in the aforesaid US—A—4,302,402. This action by camming surface 96 prevents unnecessary wear on detector 110.

Members 60 and 80 are continuously coupled to the drive means 100 (Fig. 2). As used herein, a "continuous coupling" refers to a coupling that produces movement in both members 60 and 80 whenever drive means 100 is operative. In the disclosed arrangement, there is no necessity for means for disengaging the coupling when one of the members 60, 80, is not actively moving a test element E along its path. Drive means 100 comprises a motor 102, a rotatable drive shaft 104, and pinion 106 mounted on shaft 104 (Fig. 2). Pinion 106 is continuously coupled to, or engaged with, both rack 64 and rack 84 (Fig. 3). Any reversible motor 102 is useful, for example, a stepper motor such as the motor manufactured by Airpex Co.

Preferably, detector 110 is aligned with incubator 50 and metering station 20 and is a fiber optics reflectometer, constructed, for example, in the manner described in the aforesaid US—A—4,302,420. In detector 110, a fiber optics head 112 is provided with at least one conventional light-emitting fiber 114 (Fig. 4). A plurality of conventional light-collecting fibers 116 are bonded together as a coparallel bundle forming a face 118 at which the light is emitted and collected. Face 118 is flat, as shown in Fig. 2, or slightly convexly curved. Weight 119 forces a properly positioned test element E into contact with face 118. Detector 110 preferably includes at least one light-emitting diode (not shown) connected to fiber 114 and a photodetector (not shown) connected to fibers 116.

The advancement of the test elements E through stations 20, 49, and 109, is preferably done automatically, following the metering of the liquid at station 20. The devices (not shown) useful for such automatic control include sensors, switches, and a microprocessor all of which are conventional devices. Display of the analyte concentration is acheived by conventional display devices, for example, a liquid crystal display 160 and/or a thermal printer 170 (Fig. 1).

The operation of analyzer 10 will be readily apparent from the preceding description. A test element E is placed in load station 19 on plate 42, as shown in Fig. 2. Manual operation of mechanism 40 serves to push the test element E under pipette tip 29 which is positioned at metering station 20. The analyte for which that test element E is constructed is either keyed into the microprocessor (not shown) by using a command key 155 of a keyboard 150 (Fig. 1) or, preferably, appropriate code markings (not shown) on test element E are automatically sensed and recorded in the microprocessor (not shown). The liquid sample is metered onto the test element E at station 20, and either an additional command is keyed into the microprocessor (not shown) when metering is complete, or a sensor (not shown) automatically generates that command. The subsequent sequence of movement of members 60 and 80 is best illustrated in Figs. 5a and 5b. To move a test element E out of metering station 20, motor 102 is automatically actuated to move member 60 and finger 70 to position A (Fig. 5a). When member 60 and finger 70 are in the A position, finger 70 engages trailing edge 17 of the test element E. When member 60 is moved in this fashion, motor 102 also moves member 80 so that shoulder 92 is in the position A' (Fig. 5b). Motor 102 is then actuated to advance member 60 and finger 70 to position B (shown in dashed lines in Fig. 5a). Camming means 58 raises cover 56 during this movement so that a test element E can be loaded into incubator 50. Simultaneously, member 80 is moved rearwardly by motor 102 to position B' (Fig. 5b).

The microprocessor (not shown) times the residence of all test elements E in incubator 50. When the timing sequence dictates that the bottommost element E in incubator 50 is to be unloaded, motor 102 is reversed, causing member 60 and finger 70 to be withdrawn from position B (Fig. 5a). Finger 70 passes through position A and retreats to position C shown in dashed lines (Fig. 5a). During the same time, member 80 advances from position B' (Fig. 5b) passes through position A' where it engages and unloads test element E from incubator 50, and moves to position C' (shown in dashed lines in Fig. 5b). In position C', shoulder 92 is effective to transfer the test element E into detector 110. The test element E in detector 110 is pushed out by the advancing test element E. After the last test element E is detected, it remains in detector 110 until a new test element E ejects it.

After member 80 is withdrawn to position A', the test element E in detector 110 is read. The withdrawal of member 80 to position A' also acts to advance finger 70 from position C to position A, where it is in position to engage the next test element E that is moved into metering station 20.

It will be apparent, therefore, that as member 60 is advancing to load elements E into incubator 50, member 80 is withdrawing in a manner that leaves undisturbed the elements in stack S. When member 80 advances to unload an element E in stack S, member 60 withdraws without disturbing test elements E being prepared for loading on stack S. Only one of the members 60, 80, at a time moves through the positions at which it engages a test element E to load it into, or unload it from, the incubator 50.

The density reading obtained by detector 110 is converted by suitable, conventional programming of the microprocessor (not shown) into a concentration reading. The concentration is displayed, for example, by display 160 and printer 170.

The materials used to make the parts described above are not critical, metals and plastics being the preferred choices. Parts that are to convey heat, such as walls 52, 54, and cover 56, are preferably formed from metals.

## Claims

1. An analyzer for the chemical analysis of a liquid contained in a test element (E), said analyzer comprising a metering station (20), a storage station (49) and a detection station (109), through which said test element (E) is moved during the analysis of said liquid, and transport means (57) for sequentially advancing said test element (E) through said stations (20, 49, 109), said transport means (57) comprising a loading member (60) movable from (1) an idle position (C) upstream of said metering station (20), to (2) an element-engaging position (A) at said metering station (20), and to (3) an element-loading position (B) at said storage station (49), and back to the other positions while not disturbing said test elements (E), and an unloading member (80) movable from (1') an idle position (B') upstream of said storage station (49), to (2') an element-engaging position (A') at said storage station (49), and to (3') an element-loading position (C') at said detection station (109), and back to the other positions while not disturbing said test elements (E), characterized by a single reversible drive means (100) simultaneously coupled to said loading member (6) and said unloading member (80) and which operates in one direction to move said loading member (60) to its (1), (2) and (3) positions while synchronously moving said unloading member (80) to its (3'), (2') and (1') positions, and vice versa.

2. An analyzer as defined in claim 1, wherein said loading and unloading members (60, 80) are reversely coupled to said drive means (100) so that actuation of said drive means (100) effects opposite relative simultaneous movement of said members (60, 80).

3. An analyzer as defined in claim 1 or 2, wherein said members (60, 80) are constrained to move along parallel paths.

4. An analyzer as defined in claim 3, wherein said paths lie one generally above the other.

5. An analyzer as defined in claim 1, 2, 3 or 4, wherein said drive means (100) includes a rotatable gear (106) and each of said members (60, 80) includes a rack gear (64, 84) engaged by said rotatable gear (106).

## Patentansprüche

1. Analysegerät zur chemischen Analyse einer in einem Testelement (E) enthaltenen Flüssigkeit, das eine Meßstation (20), eine Speicherstation (49) und eine Detektorstation (109) aufweist, durch welche das Testelement (E) während der Analyse der Flüssigkeit hindurchbewegt wird, sowie Transportmittel (57), die das Testelement (E) nacheinander durch die Stationen (20, 49, 109) hindurchtransportieren, wobei die Transportmittel (57) ein Ladeelement (60) aufweisen, das aus (1) einer unwirksamen Stellung (C) oberhalb der Meßstation (20) in (2) eine einen Eingriff mit dem Testelement bewirkende Stellung (A) an der Meßstation (20) und (3) in eine Ladestellung (B) an der Speicherstation (49) sowie in die anderen Stellungen Zurüch bewegbar ist und dabei die Testelemente (E) nicht störend beeinflußt, und wobei die Transportmittel weiterhin ein Entladeelement (80) aufweisen, das (1') aus einer unwirksamen Stellung (B') oberhalb der Speicherstation (49) in (2') eine einen Eingriff mit dem Testelement bewirkende Stellung (A') an der Speicherstation (49) und (3') eine Ladestellung (C') in der Detektorstation (109) sowie in die anderen Stellungen zurück bewegbar ist und dabei die Testelemente (E) nicht störend beeinflußt, gekennzeichnet durch eine einzige umsteuerbare Antriebseinrichtung (100), die gleichzeitig mit dem ladeelement (60) und dem Entladeelement (80) gekuppelt ist und in der einen Richtung das Ladeelement (60) in seine Stellungen (1), (2) und (3) und synchron dazu das Entladeelement (80) in seine Stellungen (3'), (2') und (1') bewegt und umgekehrt.

2. Analysegerät nach Anspruch 1, dadurch gekennseichnet, daß das Lade- und das Entladeelement (60, 80) gegenläufig mit der Antriebseinrichtung (100) gekuppelt sind, derart, daß die Betätigung der Antriebseinrichtung (100) eine gleichzeitige Relativbewegung der Elemente (60, 80) in entgegengesezten Richtungen bewirkt.

3. Analysegerät nach Anspruch 1 oder 2, dadurch gekennzeichnet, daß die Elemente (60, 80) sich nur längs parallel zueinander verlaufender Bahnen bewegen können.

4. Analysegerät nach Anspruch 3, dadurch gekennzeichnet, daß die Bewegungsbahnen im allgemeinen übereinander liegen.

5. Analysegerät nach Anspruch 1, 2, 3 oder 4, dadurch gekennzeichnet, daß die Antriebseinrichtung (100) ein drehbares Zahnrad (106) und jedes der Elemente (60, 80) eine mit dem Zahnrad (106) in Eingriff befindliche Zahnstange (64, 84) aufweisen.

## Revendications

1. Analyseur pour l'analyse chimique d'un liquide contenu dans une plaquette (E) et comprenant, d'une part, un poste débiteur (20), un poste de stockage (49) et un poste d'analyse (109) au travers desquels on déplace une plaquette (E) lors de l'analyse dudit liquide, et d'autre part, un dispositif de transport (57) pour déplacer séquentiellement une plaquette (E) au travers desdit postes (20, 49, 109), ce dispositif (57) comprenant, d'une part, un organe de chargement (60) pouvant se déplacer à partir de (1) une première position de repos (C) située en amont du poste débiteur 20, vers (2) une deuxième position d'attente (A) où l'organe de chargement est en contact avec une plaquette dans ledit poste débiteur, et vers (3) une troisième position de chargement (B) situé dans le poste de stockage (49), et revenir à la deuxième puis à la première position sans perturber la position des plaquettes (E), et d'autre part, un organe de déchargement (80) pouvant se déplacer à partir de (1') une première position de repos (B') située en amont du poste de stockage 49, vers (2') une deuxième position d'attente (A') où l'organe de déchargement est en contact avec une plaquette (E) dans ledit poste de stockage (49), et (3') vers une troisième position de chargement (C') située dans le poste d'analyse (109), puis revenir à la deuxième puis à la première position sans perturber la position des plaquettes (E), analyseur caractérisé en ce qu'il comprend un dispositif d'entraînement (100) réversible unique qui est relié simultanément à l'organe de chargement (60) et à l'organe de déchargement (80) et qui fonctionne dans un sens pour déplacer en synchronisme, d'une part, l'organe de chargement vers ses première, deuxième et troisième positions et, d'autre part, l'organe de déchargement vers ses troisième, deuxième et première positions, et vice versa.

2. Analyseur conforme à la revendication 1, caractérisé en ce que les organes de chargement et de déchargements sont reliés au dispositif d'entraînement (100) de manière à pouvoir être animé d'un mouvement de va et vient et en ce que la mise en oeuvre du dispositif d'entraînement (100) provoque des déplacements opposés et simultanés de l'organe de chargement (60) et de l'organe de déchargement (80).

3. Analyseur conforme à l'une quelconque des revendications 1 ou 2, caractérisé en ce que l'organe de chargement (60) et l'organe de déchargement (80) se déplacent sur des trajectoires parralléles.

4. Analyseur conforme à la revendication 3, caractérisé en ce que les trajectoires sont situées l'une au dessus de l'autre.

5. Analyseur conforme à l'une quelconque des revendications 1 à 4, caractérisé en ce que le dispositif d'entraînement (100) comprend un engrenage rotatif (106) et en ce que les organes (60, 80) comprennent, chacun, une crémaillère (64, 84) en prise avec l'engrenage (106).

FIG. 1

II

120

20

160

10

GLU   195   RUN mg/012

42

43

43

170

FLUID  7  8  9  ID

CAL  4  5  6  RECALL

SELECT  1  2  3  CLEAR

PRINT  0  ENTER

40

II

155   150

0 088 601

*FIG. 2*

0 088 601

FIG. 3

FIG. 4

3

*FIG. 5a*

*FIG. 5b*